# EUROPÄISCHE PATENTANMELDUNG

(11) **EP 3 706 457 A1**
(43) Veröffentlichungstag der Anmeldung: **09.09.2020**
(21) Anmeldenummer: 20020097.0
(22) Anmeldetag: 04.03.2020
(51) Int. Cl.: H04W 24/08, H04W 16/18, H04L 12/26, H04W 12/06, H04W 12/00, G06N 20/00, H04L 29/06, H04L 12/24, H04W 4/02, H04W 24/02, H04W 64/00, H04L 29/08

(54) **ÜBERWACHUNG EINER DIENSTGÜTE**

(30) Priorität: 07.03.2019 DE 102019001596
(71) Anmelder: Giesecke+Devrient Mobile Security GmbH, 81677 München (DE)
(72) Erfinder: Beck, Kevin, 85116 Egweil (DE)

(57) **Zusammenfassung**

In einem Verfahren zum Überwachen einer Dienstgüte von Teilnehmeridentitätsmodulen (10.1, 10.2), welche jeweils in einer bewegbaren Kommunikationsvorrichtung (30.1, 30.2) angeordnet sind, werden Dienstgüteparameter, welche die Teilnehmeridentitätsmodule (10.1, 10.2) betreffen, ermittelt, während sich die Kommunikationsvorrichtungen (30.1, 30.2) in Bewegung befinden. Den ermittelten Dienstgüteparametern wird jeweils eine Mobilfunkzelle (50) zugeordnet, die derjenigen Mobilfunkzelle (50) entspricht, in welcher sich die jeweilige Kommunikationsvorrichtung (30.1, 30.2) bei Ermittlung der Dienstgüteparameter befunden hat. Die für die jeweiligen Teilnehmeridentitätsmodule (10.1, 10.2) ermittelten Dienstgüteparameter werden als Dienstgütenachricht (60) zusammen mit der zugeordneten Mobilfunkzelle (50) über ein Mobilfunknetz an einen zentralen Verarbeitungsserver (20) gesendet, welcher die Anzahl von innerhalb eines vorbestimmten Zeitrahmens empfangenen Dienstgütenachrichten pro Mobilfunkzelle (50) für jedes Teilnehmeridentitätsmodul (10.1, 10.2) ermittelt und diejenigen Teilnehmeridentitätsmodule (10.2) für eine zukünftige Überwachung ihrer jeweiligen Dienstgüte auswählt, für welche bei einer relativ hohen Anzahl unterschiedlicher Funkzellen (50) wenigstens eine Dienstgütenachricht pro Funkzelle (50) empfangen wurde.

## Beschreibung

Die vorliegende Erfindung betrifft ein Verfahren zum Überwachen einer Dienstgüte von Teilnehmeridentitätsmodulen und ein Überwachungssystem zum Überwachen einer Dienstgüte von Teilnehmeridentitätsmodulen.

Aus der DE 10 2010 030 169 A1 ist ein Kraftfahrzeug mit einer Kommunikationsvorrichtung bekannt, welche eine erste Halteeinrichtung für ein erstes Teilnehmeridentitätsmodul und eine zweite Haltereinrichtung für ein zweites Teilnehmeridentitätsmodul aufweist. Bei dem ersten Teilnehmeridentitätsmodul handelt es sich um ein vom Fahrzeughersteller bereitgestelltes Teilnehmeridentitätsmodul. Über dieses erste Teilnehmeridentitätsmodul lassen sich nur kraftfahrzeugbezogene Mobilkommunikationsdienste bzw. durch den Fahrzeughersteller angebotene Dienste ausführen. Das erste Teilnehmeridentitätsmodul ist direkt auf eine Leiterplatte der fahrzeugeigenen Steuereinrichtung gelötet oder geklebt, sodass das erste Teilnehmeridentitätsmodul nicht von einem Fahrzeugnutzer manipuliert oder entfernt werden kann. Bei dem zweiten Teilnehmeridentitätsmodul handelt es sich dagegen um ein Teilnehmeridentitätsmodul des Fahrzeugnutzers, mit welchem sich nutzerbezogene Mobilkommunikationsdienste ausführen lassen.

Um die Dienstgüte (auch Quality of Service (QoS) genannt) der Mobilkommunikationsdienste der durch den Fahrzeughersteller in deren Fahrzeugen verbauten Teilnehmeridentitätsmodule (der ersten Teilnehmeridentitätsmodul der DE 10 2010 030 169 A1) zu überwachen, aktivieren Fahrzeughersteller momentan eine zufällig ausgewählte/beliebige Teilmenge sämtlicher ihrer weltweit ausgerollten bzw. ausgelieferten Fahrzeuge für die Ermittlung dienstgüterelevanter Parameter (sogenannter Dienstgüteparameter), wie beispielsweise des Anteils abgebrochener Anrufe oder Latenzzeiten in der Datenübertragung. Die ermittelten Dienstgüteparameter werden dann über ein Mobilfunknetz an einen zentralen Server übertragen. Bei den Dienstgüteparametern handelt es sich nicht um sogenannte Nutzerdaten sondern um reine Metadaten, deren Übertragung an den zentralen Server zusätzlichen Ressourcen- und Rechenaufwand und zusätzliche Kosten für den Fahrzeughersteller verursacht. Der zentrale Server wird in der Regel nicht vom Fahrzeughersteller sondern von einem externen Anbieter bereitgestellt und unterhalten.

Um Aufwand und Kosten möglichst gering zu halten, lassen Fahrzeughersteller daher nicht die Dienstgüte sämtlicher ausgelieferter Fahrzeuge überwachen, sondern nur einer zufällig ausgewählten Teilmenge der ausgelieferten Fahrzeuge.

Eine solche willkürliche Auswahl und Aktivierung von Fahrzeugen, die bezüglich der Dienstgüte der vom Fahrzeughersteller eingebauten Teilnehmeridentitätsmodule überwacht werden soll, kann jedoch beispielsweise nicht berücksichtigen, ob sich ein Fahrzeug nur innerhalb eines kleinen Radius und somit nur in einer oder wenigen Funkzellen eines Mobilfunknetzes bewegt (geringe Überwachungsabdeckung) oder ob es mehrere Fahrzeuge gibt, die ein ähnliches Bewegungsprofil aufweisen, d.h. benachbarte oder identische Funkzellen durchfahren. So liefert beispielsweise ein Fahrzeug, welches ein Handelsvertreter beruflich nutzt, der werktags mehrere Hundert Kilometer fährt und sich somit durch eine Vielzahl unterschiedlicher Funkzellen bewegt, wesentlich informativere Dienstgüteparameterdaten als ein von einer Privatperson nur für den täglichen Weg zum und vom nahe gelegenen Arbeitsort genutztes Fahrzeug, welches sich nur durch einige wenige Funkzellen bewegt.

Legen zwei für die Bestimmung der Dienstgüte aktivierte Fahrzeuge täglich eine ähnliche Strecke, beispielsweise einen ähnlichen Arbeitsweg, zurück, werden in der Regel ähnliche Dienstgüteparameterdaten geliefert. D.h. es werden redundante Informationen über die Dienstgüte an den zentralen Server übermittelt. In diesem Fall würden die für das Teilnehmeridentitätsmodul eines der Fahrzeuge ermittelten Dienstgüteparameterdaten ausreichen.

Für den Fahrzeughersteller ergibt sich bei der bekannten, willkürlichen Auswahl der zu aktivierenden Fahrzeuge somit der Nachteil, dass bei der Übertragung der ermittelten Dienstgüteparameterdaten an den zentralen Server durch die Übermittlung von redundanten Daten und Daten geringer Aussagekraft unnötig hohe Kosten entstehen und eine unnötige Menge an Ressourcen und Rechenleistung beansprucht wird.

Aufgabe der vorliegenden Erfindung ist es demnach, ein Verfahren und ein Überwachungssystem zum Überwachen einer Dienstgüte von Teilnehmeridentitätsmodulen bereitzustellen, mittels welcher die Dienstgüte effizient und mit geringem Aufwand überwacht werden kann.

Diese Aufgabe wird durch ein Verfahren und ein Überwachungssystem mit den Merkmalen der unabhängigen Ansprüche gelöst. Vorteilhafte Ausgestaltungen und Weiterbildungen sind in den abhängigen Ansprüchen angegeben.

Bei dem erfindungsgemäßen Verfahren zur Überwachung der Dienstgüte werden die jeweiligen Teilnehmeridentitätsmodule betreffende Dienstgüteparameter ermittelt, während sich die Kommunikationsvorrichtungen, in welchen die Teilnehmeridentitätsmodule angeordnet sind, in Bewegung befinden. Dabei bezieht sich der Begriff "Dienstgüte" jeweils auf ein Teilnehmeridentitätsmodul. Den ermittelten Dienstgüteparametern wird diejenige Mobilfunkzelle (auch Funkzelle genannt) zugeordnet, in welcher sich die jeweilige, das Teilnehmeridentitätsmodul aufweisende Kommunikationsvorrichtung bei Ermittlung der Dienstgüteparameter gerade befindet bzw. befunden hat. Die für die jeweiligen Teilnehmeridentitätsmodule ermittelten Dienstgüteparameter werden als Dienstgütenachricht zusammen mit der ihnen zugeordneten Mobilfunkzelle über ein Mobilfunknetz an einen zentralen Verarbeitungsserver gesendet bzw. übertragen.

Durch den zentralen Verarbeitungsserver erfolgt für jedes Teilnehmeridentitätsmodul eine Ermittlung der Anzahl von innerhalb eines vorbestimmten Zeitrahmens empfangenen Dienstgütenachrichten pro Mobilfunkzelle. Durch den zentralen Verarbeitungsserver werden dann diejenigen Teilnehmeridentitätsmodule für eine zukünftige Überwachung ihrer jeweiligen Dienstgüte ausgewählt, für welche für eine relativ hohe Anzahl unterschiedlicher Funkzellen (d.h. eine relativ große Überwachungsabdeckung) wenigstens eine Dienstgütenachricht pro Funkzelle von dem zentralen Verarbeitungsserver empfangen worden ist.

Auf diese Weise werden bei einer zukünftigen/nächsten Überwachung der Dienstgüte nur die Teilnehmeridentitätsmodule berücksichtigt, die in der Vergangenheit (insbesondere bei der vorhergehenden Überwachung) in einem möglichst großen Gebiet eines Mobilfunknetzes überwacht werden konnten und somit wesentlich relevantere Dienstgüteparameterdaten lieferten als beispielsweise Teilnehmeridentitätsmodule, welche nur in einigen wenigen Mobilfunkzellen aktiv waren. D.h. die historischen Bewegung- und Aktivitätsprofile der die Teilnehmeridentitätsmodule umfassenden Kommunikationsvorrichtungen werden bei der Voraussage und Auswahl derjenigen (Teilmenge sämtlicher) Teilnehmeridentitätsmodule berücksichtigt, deren Einbeziehung für die Überwachung der Dienstgüte optimal oder zumindest ausreichend ist. Da bei der nächsten Überwachung nicht sämtliche im Umlauf befindlichen Teilnehmeridentitätsmodule überwacht werden müssen, und somit nicht für sämtliche Teilnehmeridentitätsmodule Dienstgütenachrichten an den zentralen Verarbeitungsserver gesendet werden müssen, der diese dann wiederum auswerten muss, lassen sich mittels des Verfahrens vorteilhafterweise sowohl der ressourcen- und rechenleistungsmäßige Aufwand als auch der Kostenaufwand reduzieren.

Die Dienstgüte eines Teilnehmeridentitätsmoduls bezeichnet dabei insbesondere die Dienstgüte von einer oder mehreren Kommunikationsverbindungen mit dem Teilnehmeridentitätsmodul. Bei den Dienstgüteparametern kann es sich beispielsweise um den Anteil abgebrochener Kommunikationsverbindungen und/oder Latenzzeiten bei einer Datenübertragung handeln.

Gemäß bevorzugter Ausgestaltung wird bei Teilnehmeridentitätsmodulen, deren Kommunikationsvorrichtungen sich durch dieselben Funkzellen, insbesondere in derselben Reihenfolge der Funkzellen, bewegen bzw. bewegt haben, nur eines dieser Teilnehmeridentitätsmodule für eine zukünftige Überwachung von dessen Dienstgüte ausgewählt. Auf diese Weise lässt sich vermeiden, dass der zentrale Verarbeitungsserver redundante Dienstgütenachrichten auswertet, und der ressourcen-, rechenleistungs- und kostenmäßige Aufwand lässt sich weiter reduzieren.

Gemäß besonders bevorzugter Ausgestaltung wird von dem zentralen Verarbeitungsserver für das Auswählen der bei einer zukünftigen Überwachung ihrer jeweiligen Dienstgüte zu berücksichtigenden Teilnehmeridentitätsmodule ein sogenanntes Machine Learning-Modell (Maschinelles-Lernen-Modell) eingesetzt. Beim Maschinellen Lernen (Machine Learning) lernt ein künstliches System/ Modell (das Machine Learning-Modell) aus Beispielen und kann diese nach Beendigung der Lernphase verallgemeinern (siehe z.B. https://de.wikipedia.org/wiki/Maschinelles_Lernen). Die Trainingsdaten für das Machine Learning-Modell bilden die für die einzelnen Teilnehmeridentitätsmodule in dem vorbestimmten Zeitrahmen vom zentralen Verarbeitungsserver empfangenen Dienstgütenachrichten pro Mobilfunkzelle. Mit anderen Worten verwendet der zentrale Verarbeitungsserver die Anzahl/Häufigkeit der in dem vorbestimmten Zeitrahmen erhaltenen Dienstgütenachrichten pro Mobilfunkzelle und pro Teilnehmeridentitätsmodul als Trainingsdaten, um mittels eines Machine Learning-Algorithmus ein mathematisches Modell (das Machine Learning-Modell) zu generieren, welches dann imstande ist, diejenigen Teilnehmeridentitätsmodule zu bestimmen und auszugeben, deren Dienstgüte es bei einer zukünftigen/ nächsten Überwachung ausreichend ist, durch Ermittlung ihrer Dienstgüteparameter pro Mobilfunkzelle zu überwachen. Mittels des Machine Learning-Modells kann somit die Auswahl und Menge der bei der Überwachung der Dienstgüte zu berücksichtigenden Teilnehmeridentitätsmodule optimiert werden.

Für das Trainieren des Machine Learning-Modells wird vorzugsweise die Methode des bestärkenden Lernens (auch verstärkendes Lernen genannt, sogenanntes Reinforcement Learning) eingesetzt. Dabei erlernt ein Software-Agent des Machine Learning-Algorithmus selbstständig eine Strategie, um erhaltene Belohnungen, d.h. eine Belohnungsfunktion (reward function), zu maximieren. Bei dem generierten Machine Learning-Modell handelt es sich somit vorzugsweise um ein Reinforcement Learning-Modell. In die Belohnungsfunktion, die für die Generierung des Machine Learning-Modells bzw. die Bewertung eines generierten Machine Learning-Modells verwendet wird, fließen vorzugsweise die Mobilfunkzellenabdeckung, die mit den für die zukünftige Überwachung ihrer Dienstgüte ausgewählten Teilnehmeridentitätsmodulen erreicht wird (d.h. die Überwachungsabdeckung von deren Funknetzverbindungen), und der ressourcen-, rechenleistungs- und/oder kostenmäßige Aufwand für das Senden und Auswerten der Dienstgüteparameternachrichten ein. Dabei wird die in einem vorbestimmten Zeitrahmen gesendete Anzahl von Dienstgütenachrichten pro Teilnehmeridentitätsmodul und pro Funkzelle insbesondere basierend auf der bisher gesendeten Anzahl vorhergesagt. Entsprechend wird die erreichbare Überwachungsabdeckung insbesondere aus der bisher mit den nun ausgewählten Teilnehmeridentitätsmodulen erreichten Überwachungsabdeckung vorhergesagt.

Ein jedes Teilnehmeridentitätsmodul wird vorzugsweise von einem SIM-Modul (SIM - Subscriber Identity Module) gebildet, d.h. von einem Chip-Modul, welches in eine Kommunikationsvorrichtung eingebracht wird und der Identifikation des Nutzers in einem Mobilfunknetz dient. Mittels des SIM-Moduls stellen Mobilfunkanbietern Nutzern mobile Kommunikationsanschlüsse für Telefonate und Datenübertragung zur Verfügung.

Gemäß bevorzugter Ausgestaltung ist jedes als SIM-Modul ausgestaltete Teilnehmeridentitätsmodul fest in einer Kommunikationsvorrichtung eines Fahrzeugs integriert/ eingebaut, sodass das SIM-Modul nicht von einem Fahrzeugnutzer manipuliert oder ausgetauscht werden kann. Das SIM-Modul kann beispielsweise auf eine Platine der jeweiligen Kommunikationsvorrichtung gelötet oder geklebt sein. Das SIM-Modul ist dabei bevorzugt vom Fahrzeughersteller bereitgestellt und dient insbesondere der Ausführung fahrzeugbezogener Mobilkommunikationsdienste und/oder durch den Fahrzeughersteller angebotener Mobilkommunikationsdienste wie beispielsweise dem Rufen eines Pannendienstes. D.h. bei dem in der Kommunikationsvorrichtung eines Fahrzeugs fest verbauten SIM-Modul handelt es sich beispielsweise um ein erstes Teilnehmeridentitätsmodul, wie es in der eingangs erwähnten DE 10 2010 030169 A1 beschrieben ist. Das fest eingebaute SIM-Modul ist vorzugsweise als sogenanntes eSIM-Modul (eSIM - embedded Subscriber Identity Module) ausgebildet.

Bei dem eSIM-Modul handelt es sich insbesondere um einen fest in der Kommunikationsvorrichtung integrierten bzw. eingebetteten Chip, der nicht austauschbar ist und vom Betreiber eines Mobilfunknetzes aktiviert werden kann. Die Aktivierung kann beispielsweise mittels eines QR-Codes erfolgen, der von der Kommunikationsvorrichtung gescannt wird. Das eSIM-Modul bietet den Vorteil, dass es von jedem Mobilfunkanbieter, der dieses unterstützt, genutzt werden kann und somit bei einem Anbieterwechsel nicht ausgetauscht werden muss. Insbesondere im Ausland erlaubt dies einen schnellen Anbieterwechsel, so dass hohe Roaming-Gebühren vermieden werden können.

Wird das Verfahren zum Überwachen der Dienstgüte von in Fahrzeugen eingesetzten Teilnehmeridentitätsmodulen eingesetzt, so prognostiziert der zentrale Verarbeitungsserver, vorzugsweise mittels eines Machine Learning-Modells, basierend auf der in der Vergangenheit in einem vorbestimmten Zeitrahmen erhaltenen Anzahl von Dienstgütenachrichten pro Mobilfunkzelle und pro Fahrzeug, d.h. basierend auf dem historischen Bewegungs- und Aktivitätsprofil eines jeden Fahrzeugs, das zukünftige Bewegungs- und Aktivitätsprofil eines jeden Fahrzeugs bzw. von dessen fest verbautem Teilnehmeridentitätsmodul. Basierend auf diesem zukünftigen Bewegungs- und Aktivitätsprofil wählt der zentrale Verarbeitungsserver vorzugsweise mit Hilfe des Machine Learning-Modells unter Kosten-/Nutzen-Abwägungen eine optimale Teilmenge ausgelieferter Fahrzeuge aus, deren jeweilige Kommunikationsvorrichtung vom Hersteller mit einem Teilnehmeridentitätsmodul ausgestattet worden ist und die zukünftig für die Überwachung der Dienstgüte ihrer Teilnehmeridentitätsmodule herangezogen werden sollen und daher zu aktivieren sind, ihre Dienstgüteparameter als Dienstgütenachrichten an den zentralen Verarbeitungsserver zu übertragen. Es sei an dieser Stelle betont, dass für das Trainieren des Machine Learning-Modells ausschließlich die Anzahl/Häufigkeit der pro Mobilfunkzelle und pro Teilnehmeridentitätsmodul in einem vorbestimmten Zeitrahmen gesendeten Dienstgütenachrichten und nicht die Inhalte der Dienstgütenachrichter, d.h. nicht die ermittelten Werte/Messwerte der Dienstgüteparameter, verwendet werden müssen.

Diese mit Hilfe maschinellen Lernens erhaltene, intelligente Auswahl einer optimalen Teilmenge von für die Dienstgüteüberwachung zu aktivierender Fahrzeuge soll die bis anhin willkürliche Auswahl einer Teilmenge zu aktivierender Fahrzeuge ablösen, da durch die beschriebene intelligente Auswahl Ressourcen-, Rechenleistungs- und Kostenaufwand minimiert werden können. D.h. durch die mit dem Verfahren erzielte optimale Auswahl der Teilmenge zu aktivierender Fahrzeuge lässt sich bei minimalem Aufwand eine optimale Überwachungsreichweite/-abdeckung für die Überwachung der Dienstgüte von in Fahrzeugen verbauten Teilnehmeridentitätsmodulen erzielen.

Selbstverständlich kann es sich bei den Kommunikationsvorrichtungen auch um mobile Endgeräte, beispielsweise Smartphones, handeln, die beispielsweise von Fußgängern und Radfahrern verwendet werden, oder die Kommunikationsvorrichtungen können in solchen mobilen Endgeräten angeordnet sein. Auch in diesem Fall kann mit Hilfe des Verfahrens, insbesondere mittels Verwendung eines Machine Learning-Modells, aus dem historischen Bewegungs- und Aktivitätsprofil des mobilen Endgeräts eine optimierte Teilmenge von bezüglich der Dienstgüte ihrer Teilnehmeridentitätsmodule zu überwachender mobiler Endgeräte ermittelt und ausgewählt werden. Dabei sind die Teilnehmeridentitätsmodule vorzugsweise ebenfalls als SIM-Module, insbesondere als austauschbare SIM-Karten, ausgebildet. Sie können jedoch auch als fest integrierte eSIM-Module ausgestaltet sein.

Das erfindungsgemäße Überwachungssystem zum Überwachen einer Dienstgüte von Teilnehmeridentitätsmodulen umfasst einen zentralen Verarbeitungsserver zum Empfangen von für die jeweiligen Teilnehmeridentitätsmodule ermittelten Dienstgüteparametern als Dienstgütenachrichten zusammen mit einer zugeordneten Mobilfunkzelle über ein Mobilfunknetz. Ferner umfasst das Überwachungssystem mehrere Kommunikationsvorrichtungen, die direkt oder indirekt bewegbar sind. In jeder Kommunikationsvorrichtung ist zumindest ein Teilnehmeridentitätsmodul angeordnet. Das Überwachungssystem ist eingerichtet ist, ein Verfahren gemäß der Erfindung auszuführen.

Die vorliegende Erfindung wird im Folgenden mit Bezug auf die beiliegenden Zeichnungen beispielhaft beschrieben. Darin zeigen:
- Figur 1: eine Ausführungsbeispiel eines erfindungsgemäßen Überwachungssystems und
- Figur 2: ein Flussdiagramm, welches ein Ausführungsbeispiel eines erfindungsgemäßen Verfahrens veranschaulicht.

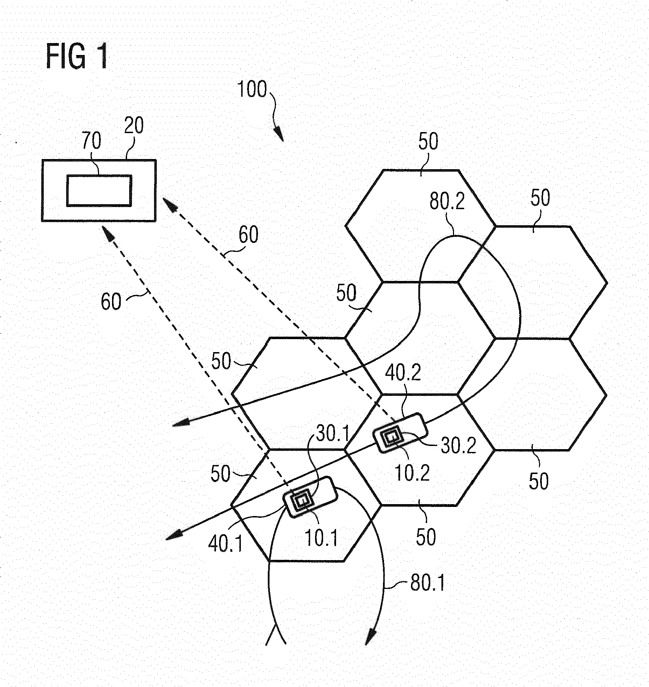

Wie in Figur 1 schematisch dargestellt, umfasst ein Überwachungssystem 100 zur Überwachung einer Dienstgüte von Teilnehmeridentitätsmodulen 10.1,10.2 einen zentralen Verarbeitungsserver 20 und mehrere Kommunikationsvorrichtungen 30.1, 30.2. In jeder Kommunikationsvorrichtung 30.1, 30.2 ist ein Teilnehmeridentitätsmodul 10.1, 10.2 angeordnet, dessen Dienstgüte (bzw. die Dienstgüte von dessen Kommunikations-/Funknetzverbindungen) überwacht werden soll. In dem vorliegenden Ausführungsbeispiel sind die Kommunikationsvorrichtungen 30.1, 30.2 in Fahrzeugen 40.1, 40.2 angeordnet. D.h., das Fahrzeug 40.1 umfasst die Kommunikationsvorrichtung 30.1 mit einem Teilnehmeridentitätsmodul 10.1, und das Fahrzeug 40.2 umfasst die Kommunikationsvorrichtung 30.2 mit einem Teilnehmeridentitätsmodul 10.2. Die Teilnehmeridentitätsmodule 10.1, 10.2 sind vorzugsweise vom Fahrzeughersteller bereitgestellt und als SIM-Module, insbesondere als eSIM-Module, ausgebildet.

Die Fahrzeuge 40.1, 40.2 sind aktiviert, die Dienstgüteüberwachung ihrer Teilnehmeridentitätsmodule 10.1, 10.2 durch Ermittlung von Dienstgüteparametern, die die Kommunikationsverbindungen der jeweiligen Teilnehmeridentitätsmodule 10.1, 10.2 betreffen, in jeder durchfahrenen Funkzelle 50 und Senden der in einem vorbestimmten Zeitrahmen erfassten Dienstgüteparameter als Dienstgütenachricht zusammen mit der zugehörigen Funkzelle 50 (bzw. einer Identifikationsangabe der Funkzelle 50) an den zentralen Verarbeitungsserver 20 zu unterstützen.

Bei dem vorliegenden Ausführungsbeispiel bewegt sich das Fahrzeug 40.1 nur durch eine einzige Funkzelle 50. Der durchgezogene Pfeil 80.1 gibt den Fahrweg des Fahrzeugs 40.1 an. D.h. die dem zentralen Verarbeitungsserver 20 von dem Fahrzeug 40.1 übermittelten einen oder mehreren Dienstgütenachrichten betreffen sämtlich nur diese eine Funkzelle 50. Der Informationsgehalt der von dem Fahrzeug 40.1 übermittelten Dienstgütenachrichten ist somit äußerst gering, und es ist fraglich, ob der Nutzen dieser Dienstgütenachrichten den Aufwand ihrer Generierung, Übermittlung und Auswertung/Zählung rechtfertigt. Das Senden von Dienstgütenachrichten ist in Figur 1 durch die gestrichelten Pfeile 60 symbolisch dargestellt.

Das Fahrzeug 40.2 mit dem Teilnehmeridentitätsmodul 10.2 durchfährt dahingehend eine Vielzahl von (vorliegend beispielhaft: sieben) Funkzellen 50, von welchen es im aktivierten Zustand Dienstnachrichten an den zentralen Verarbeitungsserver 20 sendet. Der durchgezogene Pfeil 80.2 gibt den Fahrweg des Fahrzeugs 40.2 an. Durch Berücksichtigung der von dem Fahrzeug 40.2 gesendeten Dienstgütenachrichten lässt sich somit eine wesentlich zuverlässige Aussage über die Dienstgüte des Teilnehmeridentitätsmodul 10.2 treffen (im Vergleich mit dem Teilnehmeridentitätsmodul 10.1), da dessen Kommunikationsverbindungen über ein wesentlich größeres Gebiet des nicht näher bezeichneten Mobilfunknetzes überwacht werden.

Gemäß einem Ausführungsbeispiel eines Verfahren wird bei dem dargestellten Beispiel für die zukünftige Überwachung der Dienstgüte der Teilnehmeridentitätsmodule 10.1, 10.2 nur das Teilnehmeridentitätsmodul 10.2 ausgewählt/herangezogen und entsprechend nur das Fahrzeug 40.2 aktiviert, Dienstgütenachrichten zu senden, da mit dem Fahrzeug 40.2 relativ gesehen die höchste Überwachungsabdeckung erzielt werden kann. Das Teilnehmeridentitätsmodul 10.1 wird dahingegen nicht ausgewählt, und das Fahrzeug 40.1, in welchem es sich befindet, wird nicht aktiviert, da der im Zusammenhang mit den Dienstgütenachrichten stehende Aufwand bezogen auf die geringe Überwachungsabdeckung nicht gerechtfertigt ist.

Für die Auswahl der zukünftig zu überwachenden Teilnehmeridentitätsmodule (hier des Teilnehmeridentitätsmodul 10.2) setzt der zentrale Verarbeitungsserver 20 bevorzugt einen Machine Learning-Algorithmus ein, der unter Maximierung einer Belohnungsfunktion, welche erzielte Überwachungsabdeckung bei Anzahl gesendeter Dienstgütenachrichten und somit das Verhältnis von Nutzen zu Aufwand berücksichtigt, ein Machine Learning-Modell 70 trainiert und erzeugt. Das erzeugte Machine-Learning Modell 70 gibt die bei der nächsten/zukünftigen Überwachung der Dienstgüte heranzuziehenden Teilnehmeridentitätsmodule 10.2 und somit die für die Überwachung der Dienstgüte zu aktivierenden Fahrzeuge 40.2 als Ausgangsdaten aus.

Selbstverständlich können die Kommunikationsvorrichtungen 30.1, 30.2 in mobilen Endgeräten, wie beispielsweise Smartphones, integriert sein bzw. diese bilden, welche von einer Person getragen werden, anstatt in einem Fahrzeug integriert zu sein.

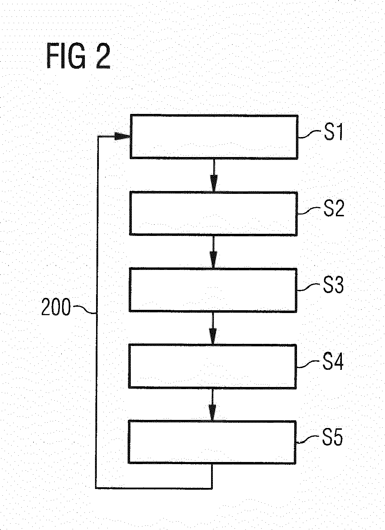

Figur 2 zeigt ein Flussdiagramm eines Verfahrens zur Überwachung der Dienstgüte von Teilnehmeridentitätsmodulen. In Schritt S1 werden die Dienstgüteparameter derjenigen Teilnehmeridentitätsmodule 10.1, 10.2, die in Kommunikationsvorrichtungen 30.1, 30.2 für die Dienstgüteüberwachung aktivierter Fahrzeuge 40.1, 40.2 angeordnet sind, ermittelt, während sich die Fahrzeuge 40.1, 40.2 in Bewegung befinden. Im nachfolgenden Schritt S2 wird den ermittelten Dienstgüteparametern diejenige Funkzelle 50 zugeordnet, in welcher sich das jeweilige Fahrzeug 40.1, 40.2 bzw. dessen Kommunikationsvorrichtung 30.1, 30.2 während der Ermittlung der Dienstgüteparameter befunden hat. Im anschließenden Schritt S3 werden die für die Teilnehmeridentitätsmodule 10.1, 10.2 ermittelten Dienstgüteparameter als Dienstgütenachricht zusammen mit der ihnen zugeordneten Funkzelle 50 (bzw. dessen Identifikationsnummer/-bezeichnung) über ein Mobilfunknetz an einen zentralen Verarbeitungsserver 20 gesendet. Im folgenden Schritt S4 ermittelt der zentrale Verarbeitungsserver 20 die Anzahl/Häufigkeit von innerhalb eines vorbestimmten Zeitrahmens empfangenen Dienstgütenachrichten pro Funkzelle 50 und Teilnehmeridentitätsmodul 10.1, 10.2. Anschließend wählt der zentrale Verarbeitungsserver 20 in Schritt S5 diejenigen Teilnehmeridentitätsmodule 10.2 für eine zukünftige Überwachung ihrer jeweiligen Dienstgüte aus, für welche sich eine relativ hohe, möglichst optimale Überwachungsabdeckung ihrer Funkverbindungen ergibt. Hierzu setzt der zentrale Verarbeitungsserver 20 in Schritt S5 vorzugsweise einen Machines Lernen-Algorithmus ein, wobei mit den in Schritt S4 ermittelten Anzahlen/Häufigkeiten der in dem vorbestimmten Zeitrahmen für die einzelnen Teilnehmeridentitätsmodule 10.1, 10.2 in Schritt S3 empfangenen Dienstgütenachrichten pro Funkzelle 50 als Eingangsdaten ein Machine Learning-Modell derart trainiert wird, dass eine Belohnungsfunktion maximiert wird. Bei der Belohnungsfunktion wird eine hohe Funkzellenüberwachungsabdeckung belohnt, während eine hohe Anzahl von in dem vorbestimmten Zeitrahmen gesendeter Dienstgütenachrichten pro Funkzelle (und damit hoher Aufwand und hohe Kosten) bestraft wird.

Das Verfahren kann wiederholt ausgeführt werden, was durch den Rücckopplungspfeil 200 angedeutet werden soll. Bei einer Wiederholung wird die Überwachungsabdeckung der mit den Teilnehmeridentitätsmodulen geschaffenen Funknetzverbindungen in Bezug auf Ressourcen-, Rechenleistungs- und Kostenaufwand weiter optimiert.

Ferner kann sich das in Figur 2 gezeigte Flussdiagramm des Verfahrens auf von Personen getragene mobile Endgeräte, in welchen die Teilnehmeridentitätsmodule 10.1,10.2 angeordnet sind, beziehen. Es sind dann diese mobilen Endgeräte, die zum Ermitteln der Dienstgüteparameter und zum Senden der Dienstgütenachrichten an den zentralen Verarbeitungsserver 20 aktiviert werden. Die mobilen Endgeräte können die Kommunikationsvorrichtungen, in welchen jeweils wenigstens ein Teilnehmeridentitätsmodul angeordnet ist, umfassen oder von diesen gebildet sein.

## Patentansprüche

1. Verfahren zum Überwachen einer Dienstgüte von Teilnehmeridentitätsmodulen (10.1, 10.2), welche jeweils in einer Kommunikationsvorrichtung (30.1, 30.2) angeordnet sind, die direkt oder indirekt bewegbar ist, **gekennzeichnet durch** die folgenden Schritte:
- Ermitteln (S1) von Dienstgüteparametern, welche die jeweiligen Teilnehmeridentitätsmodule (10.1, 10.2) betreffen, während sich die die jeweiligen Teilnehmeridentitätsmodule (10.1, 10.2) aufweisenden Kommunikationsvorrichtungen (30.1, 30.2) in Bewegung befinden,
- Zuordnen (S2) einer Mobilfunkzelle (50) zu den ermittelten Dienstgüteparametern, wobei die Mobilfunkzelle (50) der Mobilfunkzelle (50) entspricht, in welcher sich die jeweilige Kommunikationsvorrichtung (30.1, 30.2) bei Ermittlung der Dienstgüteparameter befunden hat,
- Senden (S3) der für die jeweiligen Teilnehmeridentitätsmodule (10.1, 10.2) ermittelten Dienstgüteparameter als Dienstgütenachricht (60) zusammen mit der zugeordneten Mobilfunkzelle (50) über ein Mobilfunknetz an einen zentralen Verarbeitungsserver (20),
- Ermitteln (S4) der Anzahl von innerhalb eines vorbestimmten Zeitrahmens empfangenen Dienstgütenachrichten pro Mobilfunkzelle (50) für jedes Teilnehmeridentitätsmodul (10.1, 10.2) durch den zentralen Verarbeitungsserver (20),
- Auswählen (S5) derjenigen Teilnehmeridentitätsmodule (10.2) für eine zukünftige Überwachung ihrer jeweiligen Dienstgüte, für welche bei einer relativ hohen Anzahl unterschiedlicher Funkzellen (50) wenigstens eine Dienstgütenachricht pro Funkzelle (50) empfangen wurde, durch den zentralen Verarbeitungsserver (20).

2. Verfahren nach Anspruch 1, **dadurch gekennzeichnet, dass** bei Teilnehmeridentitätsmodulen (10.1, 10.2), deren Kommunikationsvorrichtungen (30.1, 30.2) sich durch dieselben Mobilfunkzellen (50), insbesondere in derselben Reihenfolge der Funkzellen (50), bewegt haben, nur eines dieser Teilnehmeridentitätsmodule (10.2) für eine zukünftige Überwachung von dessen Dienstgüte ausgewählt wird.

3. Verfahren nach Anspruch 1 oder 2, **dadurch gekennzeichnet, dass** das Auswählen der für eine zukünftige Überwachung ihrer jeweiligen Dienstgüte zu berücksichtigenden Teilnehmeridentitätsmodule (10.2) mittels eines Machine Learning-Modells (70) erfolgt, wobei die Anzahl der für die einzelnen Teilnehmeridentitätsmodule (10.1, 10.2) empfangenen Dienstgütenachrichten pro Mobilfunkzelle (50) die Trainingsdaten des Machine Learning-Modells bildet.

4. Verfahren nach Anspruch 3, **dadurch gekennzeichnet, dass** das Trainieren des Machine Learning-Modells (70) mittels bestärkenden Lernens erfolgt.

5. Verfahren nach Anspruch 3 oder 4, **dadurch gekennzeichnet, dass** für die Generierung des Machine Learning-Modells (70) eine Belohnungsfunktion maximiert wird, welche eine erzielte Überwachungsabdeckung der Teilnehmeridentitätsmodule (10.1,10.2) und die Anzahl der von diesen gesendeten Dienstgütenachrichten berücksichtigt.

6. Verfahren nach einem der vorhergehenden Ansprüche, **dadurch gekennzeichnet, dass** ein jedes Teilnehmeridentitätsmodul (10.1, 10.2) von einem SIM-Modul gebildet ist.

7. Verfahren nach Anspruch 6, **dadurch gekennzeichnet, dass** das SIM-Modul in einer Kommunikationsvorrichtung in Form eines mobilen Endgerät, insbesondere eines Smartphone, eines Benutzers angeordnet ist.

8. Verfahren nach Anspruch 6, **dadurch gekennzeichnet, dass** das SIM-Modul fest in einer Kommunikationsvorrichtung (30.1, 30.2) eines Fahrzeugs (40.1, 40.2) eingebaut ist und nicht von einem Fahrzeugnutzer manipuliert oder ausgetauscht werden kann.

9. Verfahren nach Anspruch 7 oder 8, **dadurch gekennzeichnet, dass** es sich bei dem SIM-Modul um ein eSIM-Modul handelt.

10. Verfahren nach einem der vorhergehenden Ansprüche, **dadurch gekennzeichnet, dass** die Dienstgüteparameter den Anteil abgebrochener Kommunikationsverbindungen und/oder Latenzzeiten bei einer Datenübertragung umfassen.

11. Überwachungssystem zum Überwachen einer Dienstgüte von Teilnehmeridentitätsmodulen (10.1, 10.2), umfassend einen zentralen Verarbeitungsserver (20) zum Empfangen von für jedes Teilnehmeridentitätsmodul (10.1, 10.2) ermittelten Dienstgüteparametern als Dienstgütenachrichten zusammen mit einer zugeordneten Mobilfunkzelle (50) über ein Mobilfunknetz und mehrere Kommunikationsvorrichtungen (30.1, 30.2), die direkt oder indirekt bewegbar sind, wobei in jeder Kommunikationsvorrichtung (30.1, 30.2) zumindest ein Teilnehmeridentitätsmodul (10.1, 10.2) angeordnet ist, **dadurch gekennzeichnet, dass** das Überwachungssystem (100) eingerichtet ist, ein Verfahren nach einem der vorhergehenden Ansprüche auszuführen.
